# EUROPEAN PATENT SPECIFICATION

(11) **EP 3 377 738 B1**
(45) Date of publication and mention of the grant of the patent: **04.08.2021**
(21) Application number: 15908687.5
(22) Date of filing: 19.11.2015
(51) Int. Cl.: F01M 1/16, F01M 1/12, F16K 17/10, F16K 31/12, F16N 25/02

(54) **PRESSURE REGULATING ARRANGEMENT AND METHOD**
DRUCKREGULIERUNGSANORDNUNG UND -VERFAHREN
AGENCEMENT ET PROCÉDÉ DE RÉGULATION DE PRESSION

(43) Date of publication of application: 26.09.2018
(73) Proprietor: Wärtsilä Finland Oy, 65100 Vaasa (FI)
(72) Inventor: SUNDSTRÖM, Stefan, FI-65100 Vaasa (FI)
(74) Representative: Berggren Oy
(86) International application number: PCT/FI2015/050804
(87) International publication number: WO 2017/085355

(56) References cited:
- WO-A1-2014/136649
- US-A- 4 669 493
- US-A1- 2013 343 937
- US-A1- 2013 343 937
- US-A1- 2014 090 725

## Description

### Technical field of the invention

The present invention relates to a pressure regulating arrangement for a lubricating system of a piston engine in accordance with the preamble of claim 1. The invention also concerns a method for regulating pressure in a lubricating system of piston engine, as defined in the other independent claim.

### Background of the invention

Large internal combustion engines, such as ship or power plant engines, often need to be operated in very different operating conditions. To ensure sufficient lubrication of various components of the engines, the lubricating systems need to be designed to manage even the harshest operating conditions. This means that the capacity of the lubricating oil pumps is over-dimensioned for easier operating conditions. Due to the over-sizing, the flow rates and lubricating oil pressures are most of the running time of the engines higher than needed. The power needed for operating a lubricating oil pump is proportional to the flow rate and the pressure in the lubricating system, which means that excessive flow rates and pressures waste energy. US4669493 A and US2013/343937 A1 disclose two known pressure regulating arrangements suitable for lubricating systems.

### Summary of the invention

An object of the present invention is to provide an improved pressure regulating arrangement for a lubricating system of a piston engine. The pressure regulating arrangement comprises a pressure regulating valve having an inlet that can be arranged in fluid communication with a lubricating oil line where pressure needs to be regulated, an outlet that can be arranged in fluid communication with a pressure release line, a valve member that is movable between a closed position preventing flow between the inlet and the outlet and an open position allowing flow between the inlet and the outlet, and a fluid chamber, wherein pressure release from the fluid chamber is configured to allow movement of the valve member from the closed position towards the open position. The arrangement further comprises a first pressure-controlled control valve, which is configured to move from a closed position to an open position when a control pressure at the first control valve exceeds a first predetermined limit value, a control line that can be arranged in fluid communication with the lubricating oil line for transmitting control pressure to the first control valve, and means for establishing fluid communication between the fluid chamber and the first control valve. Flow through the first control valve in the open position of the valve is configured to allow outflow from the fluid chamber of the pressure regulating valve for releasing pressure from the fluid chamber.

Another object of the invention is to provide an improved method for regulating pressure in a lubricating system of a piston engine, the lubricating system comprising a pressure regulating valve for releasing pressure from a lubricating oil line into a pressure release line, the pressure regulating valve comprising a fluid chamber, wherein pressure release from the fluid chamber is configured to allow opening of the pressure regulating valve, and at least two pressure-controlled control valves, each of the control valves being configured to open when a control pressure at the valve exceeds an individual predetermined limit value, wherein flow through any of the control valves is configured to allow outflow from the fluid chamber of the pressure regulating valve for releasing pressure from the fluid chamber.

The characterizing features of the arrangement according to the invention are given in the characterizing part of claim 1. The characterizing features of the method according to the invention are given in the other independent claim.

The pressure regulating arrangement according to the invention comprises a second pressure-controlled control valve, which is configured to move from a closed position to an open position when a control pressure at the second control valve exceeds a second predetermined limit value, which is lower than the first predetermined limit value, means for transmitting control pressure to the second control valve, and means for establishing fluid communication between the fluid chamber and the second control valve, wherein flow through the second control valve in the open position of the valve is configured to allow outflow from the fluid chamber of the pressure regulating valve for releasing pressure from the fluid chamber, and the pressure regulating arrangement further comprises means for selectively preventing fluid communication between the fluid chamber and the second control valve.

The method according to the invention comprises the steps of determining a parameter or a set of parameters describing the operating conditions of the engine, based on the parameters, determining at least two different operating conditions requiring different lubricating oil pressures, monitoring the operating conditions of the engine, and in each detected operating conditions of the engine, arranging the fluid chamber of the pressure regulating valve in fluid communication with at least that control valve, which has the lowest predetermined limit value corresponding to at least the required lubricating oil pressure, and preventing fluid communication between the fluid chamber and those control valves, of which predetermined limit values are lower than the required lubricating oil pressure.

With the pressure regulating arrangement and method according to the invention, the pressure level in a lubricating system can be easily lowered from a certain pressure level to a lower pressure level. The pressure levels can be adjusted so that when the first control valve is responsible for the pressure regulation, the oil pressure in the lubricating system can meet the needs of difficult operating conditions of the engine. On the other hand, when a lower oil pressure is sufficient, the second control valve can regulate the pressure and the energy consumption of the lubricating system is reduced.

According to an embodiment of the invention, the means for selectively preventing fluid communication between the fluid chamber and the second control valve is a selector valve selectively allowing flow from the fluid chamber either to the first control valve or to the second control valve. Instead of a selector valve, a two-way valve that is arranged between the fluid chamber and the second control valve can be used. The valve used for preventing flow to the second control valve can be an electrically controlled valve, such as a solenoid valve.

According to an embodiment of the invention, the valve between the fluid chamber and the control valve(s) is biased to a position, in which flow from the fluid chamber to the second control valve is prevented. This ensures that sufficient lubricating oil pressure is available also in case the valve cannot be actively actuated to select the appropriate control valve.

A lubricating system of a piston engine in accordance with the invention comprises a pressure regulating arrangement defined above.

### Brief description of the drawings

Embodiments of the invention are described below in more detail with reference to the accompanying drawings, in which
Fig. 1 shows an example of a lubricating system of a piston engine,
Fig. 2 shows a pressure regulating arrangement according to an embodiment of the invention for a lubricating system of a piston engine, and
Fig. 3 shows a pressure regulating arrangement according to another embodiment of the invention.

### Description of embodiments of the invention

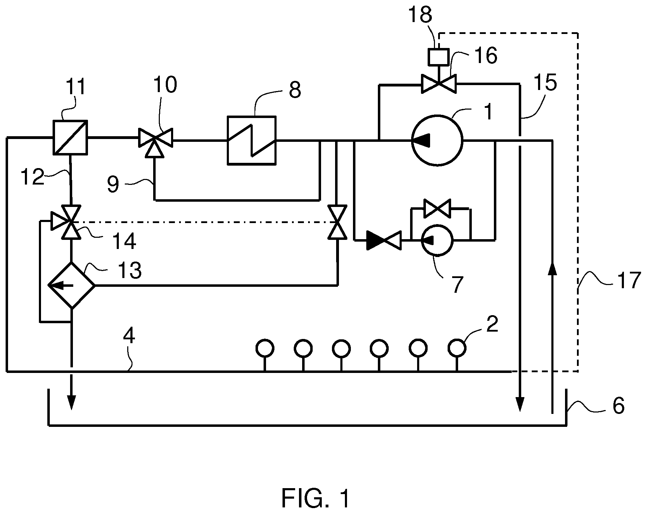

In figure 1 is shown a lubricating system of a piston engine. The engine is a large internal combustion engine, such as a main or an auxiliary engine of a ship or an engine that is used at a power plant for producing electricity. The cylinder bore of the engine is at least 150 mm. The rated power of the engine is at least 150 kW per cylinder. In the embodiment of figure 1, the engine comprises six cylinders that are arranged in line, but the engine can comprise any reasonable number of cylinders. The cylinders could also be arranged for example in a V-configuration. The lubricating system is configured to deliver lubricating oil to the components of the engine for lubrication and/or cooling purposes. The lubricating system supplies lubricating oil for instance to the main bearings 2 of the engine, but the lubricating oil can be supplied also to various other places.

The lubricating system comprises an oil pump 1, which pressurizes the lubricating oil and feeds it into a lubricating oil line 4, in which the lubricating oil is conducted to the components where the lubricating oil is needed. The lubricating oil is taken from an oil reservoir 6. In the embodiment of figure 1, the oil reservoir is a wet oil sump 6. However, the engine could also be provided with a dry oil sump, in which case the oil would be taken from a separate tank, into which the oil is introduced from the dry sump. The oil pump 1 produces a constant flow rate at constant engine speed. The oil pump 1 can be, for instance, a screw pump. The lubricating system is also provided with a prelubricating pump 7, which ensures that lubricating oil flow is available also when the engine is started. The prelubricating pump 7 is arranged in parallel with the oil pump 1. The prelubricating pump 7 is electrically driven.

An oil cooler 8 is arranged downstream from the oil pump 1 for cooling the pressurized lubricating oil. A by-pass duct 9 is arranged in parallel with the oil cooler 8 for allowing bypassing of the oil cooler 8 when the lubricating oil temperature is low, for instance when the engine is started. A by-pass valve 10 connects the by-pass line 9 to the lubricating oil line 4 on the downstream side of the oil cooler 8. The by-pass valve 10 is used for selectively guiding the lubricating oil flow from the oil pump 1 either through the oil cooler 8 or through the by-pass line 9. The by-pass valve 10 can be temperature-controlled for automatically keeping the lubricating oil temperature within the appropriate temperature range.

A filter 11 is arranged downstream from the by-pass valve 10. The filter 11 is an automatic backflushing filter, which is connected to a backflushing line 12. Automatic backflushing of the filter 11 ensures proper functioning of the filter 11 and minimizes the need for maintenance. The backflushing line 12 is provided with a centrifugal filter 13, which removes particles from the lubricating oil before the oil is returned to the oil sump 6. The backflushing line 12 is further provided with a three-port valve 14, which allows bypassing of the centrifugal filter 13 when needed.

A pressure release line 15 is connected to the lubricating oil line 4 between the oil pump 1 and the oil cooler 8. In the example of figure 1, the pressure release line 15 is connected to the lubricating oil line 4 immediately after the oil pump 1. The pressure release line 15 is provided with a pressure regulating valve 16, which is controlled on the basis of the pressure in the lubricating oil line 4. When the pressure in the lubricating oil line 4 exceeds a predetermined limit value, the pressure regulating valve 16 opens and allows lubricating oil flow from the lubricating oil line 4 via the pressure release line 15 into the oil sump 6 reducing thus the pressure in the lubricating oil line 4. The control pressure is transmitted to the pressure regulating valve 16 via a control line 17. In the example of figure 1, the control line 17 is connected to the lubricating oil line 4 downstream from the main bearings 2 of the engine. The pressure in the lubricating system is thus controlled on the basis of the pressure detected in the lubricating oil line 4 after the main bearings 2. The point where the control line 17 is connected to the lubricating oil line 4 is a pressure monitoring point. Due to the flow resistance in the lubricating system, the pressure after the main bearings 2, i.e. at the pressure monitoring point is lower than the pressure immediately after the oil pump 1. The pressure of the lubricating system could also be monitored at some other point of the lubricating system instead of the point shown in figure 1. The most suitable point for the connection of the control line 17 depends on the configuration of the lubricating system and the lubrication and/or cooling needs of different components of the lubricating system.

It should be noted that the lubricating system described above is only an example of a lubricating system where a pressure regulating arrangement according to the invention can be used. All the components listed above are not necessary, and on the other hand, the lubricating system can comprise many additional components. The lubricating oil can be used also for cooling purposes, for instance for jet cooling of the pistons of the engine.

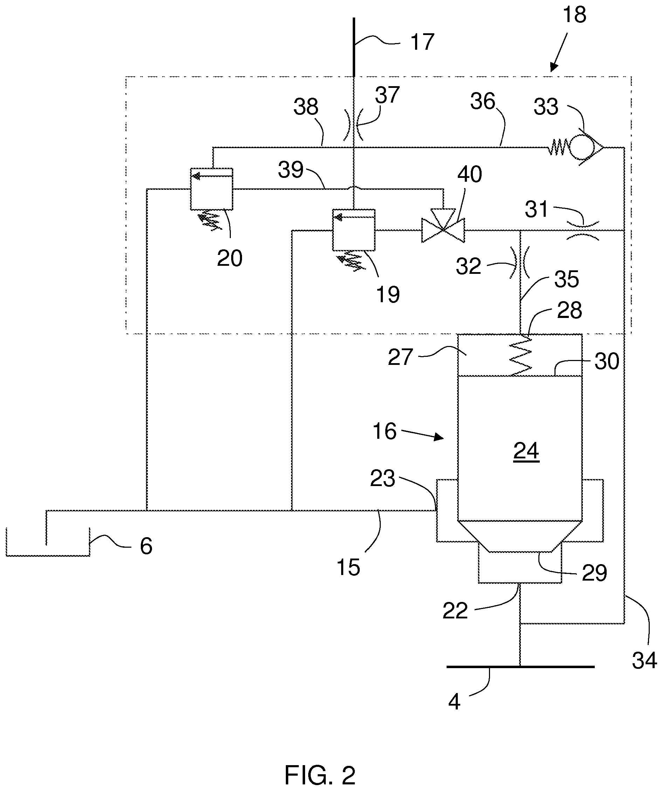

Figure 2 shows a pressure regulating arrangement according to an embodiment of the invention. The pressure regulating valve 16 of the lubricating system forms part of the pressure regulating arrangement. The pressure regulating valve 16 comprises an inlet 22 and an outlet 23. The inlet 22 of the pressure regulating valve 16 is in fluid communication with the lubricating oil line 4. The outlet 23 of the pressure regulating valve 16 is in fluid communication with the pressure release line 15. When the pressure regulating valve 16 is open, pressure can thus be released from the lubricating oil line 4 into the pressure release line 15 and the pressure in the lubricating system can be controlled. The pressure regulating valve 16 comprises a valve member 24 having a closed position and an open position. In the closed position, which is shown in figure 2, flow from the inlet 22 of the pressure regulating valve 16 to the outlet of the pressure regulating valve 16 is prevented. In the open position of the valve member 24, flow from the inlet 22 to the outlet 23 is allowed. The pressure regulating valve 16 is constructed so that the fluid pressure in the inlet 22 of the pressure regulating valve 16 pushes the valve member 24 towards the open position. In the embodiment of figure 2, an end surface of the valve member 24 forms a first piston surface 29, on which the pressure in the inlet 22 of the pressure regulating valve 16 is applied. An opposite end of the valve member 24 forms a second piston surface 30, which delimits a fluid chamber 27, which is arranged inside the pressure regulating valve 16. The pressure regulating valve 16 comprises a spring 28, which pushes the valve member 24 towards the closed position. The pressure in the fluid chamber 27 thus creates together with the force of the spring 28 a closing force, and the pressure regulating valve 16 opens when the force created by the fluid pressure acting on the first piston surface 29 exceeds the combined closing force of the spring 28 and the hydraulic pressure acting on the second piston surface 30. The valve member 24 of the pressure regulating valve 16 is thus allowed to move from the closed position towards the open position when the pressure in the fluid chamber 27 is released.

The fluid chamber 27 of the pressure regulating valve 16 is in fluid communication with the lubricating oil line 4 via an actuating line 34. When there is no flow in the actuating line 34, the pressure in the fluid chamber 27 is thus substantially the same as in the lubricating oil line 4. The inlet 22 of the pressure regulating valve 16 and the actuating line 34 are connected to the same point of the lubricating oil line 4, and the pressure in the actuating line 34 is thus substantially the same as in the inlet 22. The area of the second piston surface 30 is greater than the area of the first piston surface 29 of the valve member 24. In a static situation the closing force applied to the valve member 24 by the spring 28 and the fluid pressure in the fluid chamber 27 thus exceeds the opening force applied to the valve member 24 by the fluid pressure in the inlet 22 of the pressure regulating valve 16, and the pressure regulating valve 16 is kept in the closed position.

The actuating line 34 is provided with a first control valve 19, which is arranged downstream from a connecting line 35 connecting the fluid chamber 27 of the pressure regulating valve 16 to the actuating line 34. The first control valve 19 can be used for controlling the opening of the pressure regulating valve 16. The downstream side of the first control valve 19 is connected to the pressure release line 15. The first control valve 19 is a pressure-controlled valve, which is kept in a closed position by spring force. The first control valve 19 is in fluid communication with the lubricating oil line 4 via the control line 17. The control line 17 transmits control pressure to the first control valve 19. In the embodiment of the figures, the control line 17 is connected to the lubricating oil line 4 close to the main bearings 2 of the engine. The pressure regulating valve 16 is thus controlled on the basis of the lubricating oil pressure in the main bearings 2. The first control valve 19 is configured to open when the pressure in the control line 17 exceeds a first predetermined limit value. The opening pressure of the first control valve 19 is adjustable. The first control valve 19 is adjusted to open at a pressure that equals the maximum lubricating oil pressure needed at the main bearings 2 of the engine. The pressure can be, for instance, 5 bar. When the pressure in the control line 17 exceeds the first predetermined limit value, the first control valve 19 is opened. When the first control valve 19 is in fluid communication with the fluid chamber 27 of the pressure regulating valve 16 and in the open position, outflow from the fluid chamber 27 into the pressure release line 15 through the first control valve 19 is allowed, and pressure is released from the fluid chamber 27. The valve member 24 of the pressure regulating valve 16 is thus allowed to move from the closed position towards the open position.

The first control valve 19 can be used for maintaining the pressure at the pressure monitoring point of the lubricating oil line 4 around the first predetermined limit value. The first predetermined limit value is chosen so that the lubrication of the main bearings 2 of the engine is sufficient even in harsh operating conditions of the engine. However, this lubricating oil pressure is needed only occasionally, and by maintaining the lubricating oil pressure at that level, energy is wasted. Therefore, the pressure regulating arrangement according to the invention comprises even a second control valve 20. Also the second control valve 20 is a pressure-controlled valve. The second control valve 20 is configured to open when a control pressure at the second control valve 20 exceeds a second predetermined limit value, which is lower than the first limit value. Also the opening pressure of the second control valve 20 is adjustable. The second predetermined limit value can be, for instance, 2 bar. By means of the second control valve 20, the lubricating oil pressure at the main bearings 2 of the engine can thus be adjusted to be at a lower level than the pressure selected by the first control valve 19.

A second control line 38 connects the second control valve 20 to the control line 17. Via the second control line 38, control pressure is thus transmitted to the second control valve 20. A second connecting line 39 connects the second control valve 20 to the actuating line 34. The downstream side of the second control valve 20 is connected to the pressure release line 15. When the pressure in the control line 17 exceeds the second predetermined limit value, the second control valve 20 opens. When the second control valve 20 is in the open position and in fluid communication with the fluid chamber 27 of the pressure regulating valve 16, outflow from the fluid chamber 27 via the second control valve 20 into the pressure release line 15 is allowed. Pressure is thus released from the fluid chamber 27 of the pressure regulating valve 16 and the valve member 24 of the pressure regulating valve 16 is allowed to move from the closed position towards the open position. The second control valve 20 can thus maintain the pressure in the lubricating oil line 4 at the pressure monitoring point around the second predetermined limit value.

When fluid flow from the fluid chamber 27 of the pressure regulating valve 16 into the pressure release line 15 via one of the control valves 19, 20 is allowed, the closing force applied to the valve member 24 of the pressure regulating valve 24 by the fluid pressure in the fluid chamber 27 is reduced. As a consequence, the hydraulic force acting on the first piston surface 29 of the valve member 24 can push the valve member 24 towards the open position, allowing thus flow from the lubricating oil line 4 into the pressure release line 15. Flow from the lubricating oil line 4 into the fluid chamber 27 via the actuating line 34 is allowed. However, the actuating line 34 is provided with a first throttle 31, which is configured to cause a pressure drop when the lubricating oil flows through it. The pressure drop allows the pressure in the fluid chamber 27 to decrease and the valve member 24 to move to the open position. A second throttle 32 is arranged in the connecting line 35. This throttle 35 limits the moving speed of the valve member 24.

The actuating line 34 is provided with a branch 36, which is connected to the control line 17. The branch 36 is provided with a check valve 33, which allows flow from the actuating line 34 to the control line 17, when a predetermined pressure difference over the check valve 33 is exceeded. The predetermined pressure difference can be, for instance, 3 bar. This arrangement ensures that in case the pressure in the lubricating oil line 4 at the point to which the pressure regulating valve 16 is connected exceeds a limit value, for instance due to clogging of the filter 11, the pressure regulating valve 16 opens and prevents excessive pressure at the oil pump 1. The control line 17 is provided with a third throttle 37, which ensures that the pressure in the branch 36 does not disappear via the control line 17 when the check valve 33 opens, but the pressure in the lubricating oil line 4 at the point where the pressure regulating valve 16 is connected to it becomes the control pressure of the first control valve 19 and the second control valve 20. The third throttle 37 also prevents pulsations in the control line 17.

The pressure regulating arrangement is further provided with means for selectively preventing fluid communication between the fluid chamber 27 of the pressure regulating valve 16 and the second control valve 20. By preventing flow from the fluid chamber 27 to the second control valve 20, which has a lower opening pressure than the first control valve 19, lubricating oil pressure at the pressure monitoring point can be adjusted to the level corresponding to the first predetermined limit value, i.e. the opening pressure of the first control valve 19. In the embodiment of figure 2, the pressure regulating arrangement is provided with a selector valve 40, which can be used for selectively opening fluid communication between the fluid chamber 27 and either the first control valve 19 or the second control valve 20. The selector valve 40 is a 3/2-valve having two positions. In a first position of the selector valve 40, flow from the fluid chamber 27 to the first control valve 19 is allowed and flow to the second control valve 20 is prevented, and in a second position of the selector valve 40, flow to the second control valve 20 is allowed and flow to the first control valve 19 is prevented. The selector valve 40 is an actively controllable valve. The selector valve 40 can be an electrically controlled valve, such as a solenoid valve. The selector valve 40 is biased to the first position, for instance by a spring. This ensures that the higher lubricating oil pressure is available also when the selector valve 40 cannot be actuated. This could happen for example in case of a faulty solenoid of the selector valve 40. The control valves 19, 20 and the selector valve 40 can be integrated in a valve module 18.

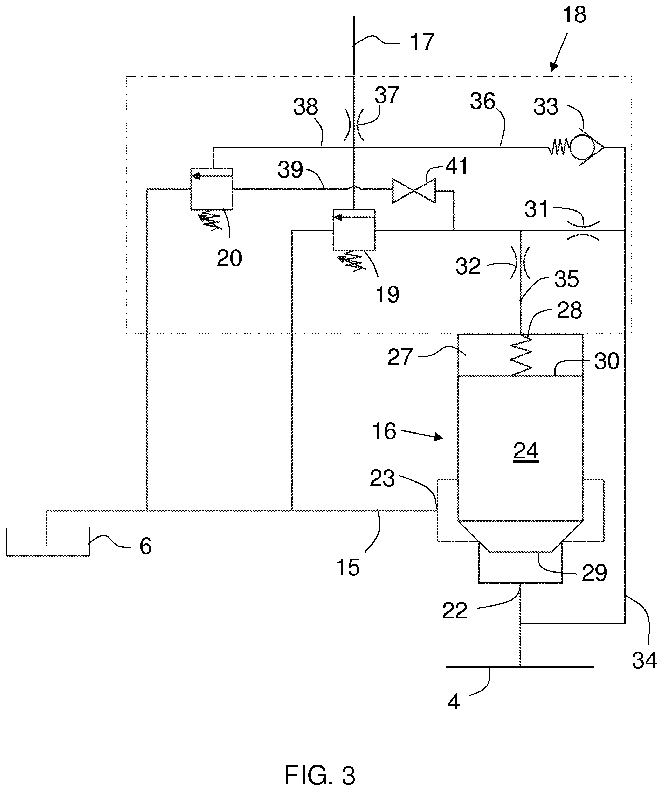

Figure 3 shows a pressure regulating arrangement according to another embodiment of the invention. This embodiment is similar to the embodiment of figure 2, but instead of the selector valve 40 of figure 2, a different valve is used for selecting which one of the control valves 19, 20 is responsible for the pressure regulation. In the embodiment of figure 3, a two-way valve 41 that is arranged between the fluid chamber 27 of the pressure regulating valve 16 and the second control valve 20 is used for selectively preventing fluid communication between the fluid chamber 27 and the second control valve 20. The two-way valve 41 is arranged in the second connecting line 39. The valve 41 is an on/off valve having a closed position and an open position. In the open position of the valve 41, fluid communication between the fluid chamber 27 and the second control valve 20 is allowed. In the closed position of the valve 41, fluid communication between the fluid chamber 27 and the second control valve 20 is prevented. The valve 41 is an actively controllable valve. It can be an electrically controlled valve, such as a solenoid valve. The valve 41 is biased to the closed position, for instance by a spring. This ensures that the first control valve 19 is responsible for the pressure control in case the two-way valve 41 cannot be controlled, for instance because of a faulty solenoid.

The pressure regulating arrangement could comprise more than two control valves 19, 20. For instance, the pressure regulating arrangement could comprise a third control valve, which is configured to open when a control pressure at the third control valve exceeds a third predetermined limit value, which is between the first and the second predetermined limit values. The pressure regulating arrangement would further comprise means for arranging the third control valve in fluid communication with the fluid chamber 27 of the pressure regulating valve 16, means for transmitting control pressure to the third control valve and means for selectively preventing fluid communication between the fluid chamber 27 and the third control valve. Three different pressure levels could thus be selected.

When the engine is operated, the pressure needed in the lubricating system varies according to the operating conditions of the engine. The pressure in a lubricating system comprising a pressure regulating arrangement according to the invention can be regulated so that the use of excessive lubricating oil pressures can be avoided.

The required lubricating oil pressure can depend on several different factors, such as the engine load, engine speed and the use of variable inlet valve closing timing (VIC). For instance, a higher lubricating oil pressure may be needed when a VIC function is in use or when the engine load is high and jet cooling of the pistons of the engine requires greater cooling oil flow rate. For optimal pressure regulation in the lubricating system, a parameter or a set of parameters describing the operating conditions of the engine can be determined. The parameters can include, for instance, engine load, engine speed and the status of the VIC function (on/off). Based on the parameters, different engine operating conditions are determined. For each operating conditions, a corresponding required lubricating oil pressure is determined. When the engine is operated, the operating conditions of the engine are monitored.

Based on the detected operating conditions, the fluid chamber 27 of the pressure regulating valve 16 is arranged in fluid communication with that control valve 19, 20, which sets the lubricating oil pressure at the pressure monitoring point to the lowest possible level corresponding to at least the required lubricating oil pressure. Fluid communication between the fluid chamber 27 and those control valves 19, 20 having a lower opening pressure than the required lubricating oil pressure is prevented.

As an example, the status of a VIC function can be monitored. When the VIC function is switched on, it can be considered as an indication of operating conditions requiring lubricating oil pressure of 5 bar. The first control valve 19 is adjusted to open when the control pressure is 5bar and the second control valve 20 is adjusted to open when the control pressure is 2 bar. Only the first control valve 19 can thus maintain the pressure at the pressure monitoring point at the required level. Fluid communication between the fluid chamber 27 of the pressure regulating valve 16 and the first control valve 19 is allowed and fluid communication between the fluid chamber 27 and the second control valve 20 is prevented. The control pressure is transmitted via the control line 17 to both control valves 19, 20. However, since outflow from the fluid chamber 27 through the second control valve 20 is not allowed, the second control valve 20 does not affect the pressure regulation, but the first control valve 19 regulates the pressure. The pressure at the pressure monitoring point is thus maintained around 5 bar.

If the operating conditions of the engine require lubricating oil pressure of only 2 bar, fluid communication between the fluid chamber 27 of the pressure regulating valve 16 and the second control valve 20 can be allowed. Control pressure is transmitted to both control valves 19, 20 via the control line 17. The second control valve 20 opens when the control pressure exceeds 2 bar, and the pressure at the pressure monitoring point is maintained around 2 bar. This pressure is not sufficient for opening the first control valve 19, and the first control valve 19 is kept closed. The second control valve 20 is thus responsible for the pressure regulation. In the embodiment of figure 2, flow from the fluid chamber 27 of the pressure regulating valve 16 to the first control valve 19 is prevented. In the embodiment of figure 3, flow to the first control valve 19 is allowed, but it does not affect the pressure regulation, since the control pressure remains at a level that is too low for opening the first control valve 19.

If the pressure regulating arrangement is provided with more than two control valves, flow from the fluid chamber 27 of the pressure regulating valve 16 can be allowed to all those control valves that have a higher opening pressure than the pressure needed in the lubricating oil line. Flow to those control valves having a lower opening pressure than the pressure needed in the lubricating oil line 4 at the pressure monitoring point needs to be prevented.

It will be appreciated by a person skilled in the art that the invention is not limited to the embodiments described above, but may vary within the scope of the appended claims. For instance, the opening pressures of the control valves do not need to be adjustable.

## Claims

1. A pressure regulating arrangement for a lubricating system of a piston engine, which pressure regulating arrangement comprises
- a pressure regulating valve (16) having an inlet (22) that can be arranged in fluid communication with a lubricating oil line (4) where pressure needs to be regulated, an outlet (23) that can be arranged in fluid communication with a pressure release line (15), a valve member (24) that is movable between a closed position preventing flow between the inlet (22) and the outlet (23) and an open position allowing flow between the inlet (22) and the outlet (23), and a fluid chamber (27), wherein pressure release from the fluid chamber (27) is configured to allow movement of the valve member (24) from the closed position towards the open position,
- a first pressure-controlled control valve (19), which is configured to move from a closed position to an open position when a control pressure at the first control valve (19) exceeds a first predetermined limit value,
- a control line (17) that can be arranged in fluid communication with the lubricating oil line (4) for transmitting control pressure to the first control valve (19), and
- means for establishing fluid communication between the fluid chamber (27) and the first control valve (19),
wherein flow through the first control valve (19) in the open position of the valve (19) is configured to allow outflow from the fluid chamber (27) of the pressure regulating valve (16) for releasing pressure from the fluid chamber (27),
the pressure regulating arrangement further comprising
- a second pressure-controlled control valve (20), which is configured to move from a closed position to an open position when a control pressure at the second control valve (20) exceeds a second predetermined limit value, which is lower than the first predetermined limit value,
- means for transmitting control pressure to the second control valve (20), and
- means for establishing fluid communication between the fluid chamber (27) and the second control valve (20),
wherein flow through the second control valve (20) in the open position of the valve (20) is configured to allow outflow from the fluid chamber (27) of the pressure regulating valve (16) for releasing pressure from the fluid chamber (27), and the pressure regulating arrangement further comprises means (40, 41) for selectively preventing fluid communication between the fluid chamber (27) and the second control valve (20),
the arrangement comprises an actuating line (34) connecting the lubricating oil line (4) to the fluid chamber (27), and the actuating line (34) is provided with a throttle (31), which is configured to cause a pressure drop when lubricating oil flows through it,
**characterized in that** the actuating line (34) is provided with a branch (36), which is connected to the control line (17), and wherein the branch (36) is provided with a check valve (33), which allows flow from the actuating line (34) to the control line (17), when a predetermined pressure difference over the check valve (33) is exceeded.

2. An arrangement according to claim 1, wherein the means for selectively preventing fluid communication between the fluid chamber (27) and the second control valve (20) is a selector valve (40) selectively allowing flow from the fluid chamber (27) either to the first control valve (19) or to the second control valve (20).

3. An arrangement according to claim 1, wherein the means for selectively preventing fluid communication between the fluid chamber (27) and the second control valve (20) is a two-way valve (41) that is arranged between the fluid chamber (27) and the second control valve (20).

4. An arrangement according to claim 2 or 3, wherein the valve (40, 41) is an electrically controlled valve.

5. An arrangement according to any of claims 2 to 4, wherein the valve (40, 41) is biased to a position, in which flow from the fluid chamber (27) to the second control valve (20) is prevented.

6. A lubricating system of a piston engine, wherein the lubricating system comprises a pressure regulating arrangement according to any of the preceding claims.

7. A method for regulating pressure in a lubricating system of a piston engine, which lubricating system comprises
- a pressure regulating valve (16) for releasing pressure from a lubricating oil line (4) into a pressure release line (15), the pressure regulating valve (16) comprising a fluid chamber (27), wherein pressure release from the fluid chamber (27) is configured to allow opening of the pressure regulating valve (16), and
- at least two pressure-controlled control valves (19, 20), each of the control valves (19, 20) being configured to open when a control pressure at the valve (19, 20) exceeds an individual predetermined limit value, wherein flow through any of the control valves (19, 20) is configured to allow outflow from the fluid chamber (27) of the pressure regulating valve (16) for releasing pressure from the fluid chamber (27),
the method comprising the steps of
- pressurizing the fluid chamber (27) via an actuating line (34) that is connected to the lubricating oil line (4) and comprises a throttle (31) which is configured to cause a pressure drop when lubricating oil flows through it,
- determining a parameter or a set of parameters describing the operating conditions of the engine,
- based on the parameters, determining at least two different operating conditions requiring different lubricating oil pressures,
- monitoring the operating conditions of the engine, and
- in each detected operating conditions of the engine, arranging the fluid chamber (27) of the pressure regulating valve (16) in fluid communication with at least that control valve (19, 20), which has the lowest predetermined limit value corresponding to at least the required lubricating oil pressure, and preventing fluid communication between the fluid chamber (27) and those control valves (19, 20), of which predetermined limit values are lower than the required lubricating oil pressure.

## Patentansprüche

1. Druckregelanordnung für ein Schmiersystem eines Kolbenmotors, wobei die eine Druckregelanordnung Folgendes umfasst
- ein Druckregelventil (16) mit einem Einlass (22), der in Fluidverbindung mit einer Schmierölleitung (4) angeordnet werden kann, wo der Druck geregelt werden muss, einem Auslass (23), der in Fluidverbindung mit einer Druckentlastungsleitung (15) angeordnet werden kann, einem Ventilelement (24), das zwischen einer geschlossenen Position, die einen Fluss zwischen dem Einlass (22) und dem Auslass (23) verhindert, und einer offenen Position, die einen Fluss zwischen dem Einlass (22) und dem Auslass (23) ermöglicht, beweglich ist, und einer Fluidkammer (27), wobei die Druckentlastung von der Fluidkammer (27) konfiguriert ist, um eine Bewegung des Ventilelements (24) von der geschlossenen Position in die offene Position zu ermöglichen,
- ein erstes druckgesteuertes Steuerventil (19), das konfiguriert ist, um sich von einer geschlossenen Position in eine offene Position zu bewegen, wenn ein Steuerdruck am ersten Steuerventil (19) einen ersten vorbestimmten Grenzwert überschreitet,
- eine Steuerleitung (17), die in Fluidverbindung mit der Schmierölleitung (4) angeordnet werden kann, um den Steuerdruck auf das erste Steuerventil (19) zu übertragen, und
- Mittel zum Herstellen einer Fluidverbindung zwischen der Fluidkammer (27) und dem ersten Steuerventil (19), wobei der Durchfluss durch das erste Steuerventil (19) in der geöffneten Position des Ventils (19) konfiguriert ist, um einen Ausfluss aus der Fluidkammer (27) des Druckregelventils (16) zum Ablassen von Druck aus der Fluidkammer (27) zu ermöglichen,
wobei die Druckregelanordnung ferner Folgendes umfasst
- ein zweites druckgesteuertes Steuerventil (20), das konfiguriert ist, um sich von einer geschlossenen Position in eine offene Position zu bewegen, wenn ein Steuerdruck am zweiten Steuerventil (20) einen zweiten vorbestimmten Grenzwert überschreitet, der niedriger als der erste vorbestimmte Grenzwert ist,
- Mittel zur Übertragung des Steuerdrucks auf das zweite Steuerventil (20), und
- Mittel zum Herstellen einer Fluidverbindung zwischen der Fluidkammer (27) und dem zweiten Steuerventil (20), wobei der Durchfluss durch das zweite Steuerventil (20) in der geöffneten Position des Ventils (20) konfiguriert ist, um einen Ausfluss aus der Fluidkammer (27) des Druckregelventils (16) zum Ablassen von Druck aus der Fluidkammer (27) zu ermöglichen, und die Druckregelanordnung ferner Mittel (40, 41) zum selektiven Verhindern einer Fluidverbindung zwischen der Fluidkammer (27) und dem zweiten Steuerventil (20) umfasst,
wobei die Anordnung eine Betätigungsleitung (84) umfasst, die die Schmierölleitung (4) mit der Fluidkammer (27) verbindet, und die Betätigungsleitung (34) mit einer Drossel (81) versehen ist, die konfiguriert ist, um einen Druckabfall zu verursachen, wenn Schmieröl durch sie fließt,
**dadurch gekennzeichnet, dass** die Betätigungsleitung (34) mit einem Abzweig (36) versehen ist, der mit der Steuerleitung (17) verbunden ist, und wobei der Abzweig (36) mit einem Rückschlagventil (33) versehen ist, das einen Fluss von der Betätigungsleitung (84) zur Steuerleitung (17) ermöglicht, wenn eine vorbestimmte Druckdifferenz über dem Rückschlagventil (33) überschritten wird.

2. Anordnung nach Anspruch 1, wobei das Mittel zum selektiven Verhindern einer Fluidverbindung zwischen der Fluidkammer (27) und dem zweiten Steuerventil (20) ein Auswahlventil (40) ist, das selektiv den Fluss von der Fluidkammer (27) entweder zum ersten Steuerventil (19) oder zum zweiten Steuerventil (20) ermöglicht.

3. Anordnung nach Anspruch 1, wobei das Mittel zum selektiven Verhindern der Fluidverbindung zwischen der Fluidkammer (27) und dem zweiten Steuerventil (20) ein Zweiwegeventil (41) ist, das zwischen der Fluidkammer (27) und dem zweiten Steuerventil (20) angeordnet ist.

4. Anordnung nach Anspruch 2 oder 3, wobei das Ventil (40, 41) ein elektrisch gesteuertes Ventil ist.

5. Anordnung nach einem der Ansprüche 2 bis 4, wobei das Ventil (40, 41) in eine Position vorgespannt ist, in der ein Fluss von der Fluidkammer (27) zu dem zweiten Steuerventil (20) verhindert wird.

6. Schmiersystem eines Kolbenmotors, wobei das Schmiersystem eine Druckregelanordnung nach einem der vorhergehenden Ansprüche umfasst.

7. Verfahren zur Druckregelung in einem Schmiersystem eines Kolbenmotors, wobei das Schmiersystem Folgendes umfasst
- ein Druckregelventil (16) zum Ablassen des Drucks von einer Schmierölleitung (4) in eine Druckentlastungsleitung (15);
wobei das Druckregelventil (16) eine Fluidkammer (27) umfasst,
wobei die Druckentlastung aus der Fluidkammer (27) konfiguriert ist, um das Öffnen des Druckregelventils (16) zu ermöglichen, und
- mindestens zwei druckgesteuerte Steuerventile (19, 20), wobei jedes der Steuerventile (19, 20) konfiguriert ist, um zu öffnen, wenn ein Steuervruck am Ventil (19, 20) einen eigenen vorbestimmten Grenzwert überschreitet,
wobei der Durchfluss durch eines der Steuerventile (19, 20) konfiguriert ist, um einen Ausfluss aus der Fluidkammer (27) des Druckregelventils (16) zum Ablassen von Druck aus der Fluidkammer (27) zu ermöglichen,
wobei das Verfahren die folgenden Schritte umfasst
- Druckbeaufschlagen der Fluidkammer (27) über eine Betätigungsleitung (34), die mit der Schmierölleitung (4) verbunden ist und eine Drosselklappe (31) umfasst, die konfiguriert ist, um sie einen Druckabfall zu verursachen, wenn Schmieröl durch sie fließt,
- Bestimmen eines Parameters oder einer Reihe von Parametern, die die Betriebsbedingungen des Motors beschreiben,
- Bestimmen von mindestens zwei verschiedenen Betriebsbedingungen, die unterschiedliche Schmieröldrücke erfordern, basierend auf den Parametern,
- Überwachen der Betriebsbedingungen des Motors, und
- bei jedem erkannten Betriebszustand des Motors, Anordnen der Fluidkammer (27) des Druckregelventils (16) in Fluidverbindung mit mindestens dem Steuerventil (19, 20), das den niedrigsten vorbestimmten Grenzwert aufweist, der mindestens dem erforderlichen Schmieröldruck entspricht, und Verhindern einer Fluidverbindung zwischen der Fluidkammer (27) und diesen Steuerventilen (19, 20), deren vorbestimmte Grenzwerte niedriger als der erforderliche Schmieröldruck sind.

## Revendications

1. Agencement de régulation de pression pour un système de lubrification d'un moteur à piston, lequel agencement de régulation de pression comprend
- une soupape de régulation de pression (16) ayant une entrée (22) qui peut être agencée en communication fluidique avec une conduite d'huile de lubrification (4) où la pression doit être régulée, une sortie (23) qui peut être agencée en communication fluidique avec une conduite de relâchement de pression (15), un élément de soupape (24) qui est mobile entre une position fermée empêchant l'écoulement entre l'entrée (22) et la sortie (23) et une position ouverte permettant l'écoulement entre l'entrée (22) et la sortie (23), et une chambre de fluide (27), dans lequel le relâchement de pression de la chambre de fluide (27) est configuré pour permettre un déplacement de l'élément de soupape (24) de la position fermée vers la position ouverte,
- une première soupape de commande commandée par pression (19), qui est configurée pour se déplacer d'une position fermée à une position ouverte lorsqu'une pression de commande au niveau de la première soupape de commande (19) dépasse une première valeur limite prédéterminée,
- une conduite de commande (17) qui peut être agencée en communication fluidique avec la conduite d'huile de lubrification (4) pour transmettre la pression de commande à la première soupape de commande (19), et
- des moyens pour établir une communication fluidique entre la chambre de fluide (27) et la première soupape de commande (19),
dans lequel l'écoulement à travers la première soupape de commande (19) dans la position ouverte de la soupape (19) est configuré pour permettre l'écoulement de la chambre de fluide (27) de la soupape de régulation de pression (16) afin de relâcher la pression de la chambre de fluide (27), l'agencement de régulation de pression comprenant en outre
- une seconde soupape de commande commandée par pression (20), qui est configurée pour se déplacer d'une position fermée à une position ouverte lorsqu'une pression de commande au niveau de la seconde soupape de commande (20) dépasse une seconde valeur limite prédéterminée, qui est inférieure à la première valeur limite prédéterminée,
- des moyens pour transmettre la pression de commande à la seconde soupape de commande (20), et
- des moyens pour établir une communication fluidique entre la chambre de fluide (27) et la seconde soupape de commande (20),
dans lequel l'écoulement à travers la seconde soupape de commande (20) dans la position ouverte de la soupape (20) est configuré pour permettre l'écoulement de la chambre de fluide (27) de la soupape de régulation de pression (16) afin de relâcher la pression de la chambre de fluide (27), et l'agencement de régulation de pression comprend en outre des moyens (40, 41) pour empêcher sélectivement la communication fluidique entre la chambre de fluide (27) et la seconde soupape de commande (20), l'agencement comprend une conduite d'actionnement (34) reliant la conduite d'huile de lubrification (4) à la chambre de fluide (27), et la conduite d'actionnement (34) est pourvue d'un étranglement (31), qui est configuré pour provoquer une chute de pression lorsque l'huile de lubrification le traverse,
**caractérisé en ce que** la conduite d'actionnement (34) est pourvue d'une ramification (36), qui est reliée à la conduite de commande (17), et dans lequel la ramification (36) est pourvue d'un clapet anti-retour (33), qui permet l'écoulement depuis la conduite d'actionnement (34) vers la conduite de commande (17), lorsqu'une différence de pression prédéterminée sur le clapet anti-retour (33) est dépassée.

2. Agencement selon la revendication 1, dans lequel les moyens pour empêcher sélectivement la communication fluidique entre la chambre de fluide (27) et la seconde soupape de commande (20) sont une soupape de sélection (40) permettant sélectivement l'écoulement de la chambre de fluide (27) soit vers la première soupape de commande (19), soit vers la seconde soupape de commande (20).

3. Agencement selon la revendication 1, dans lequel les moyens pour empêcher sélectivement la communication fluidique entre la chambre de fluide (27) et la seconde soupape de commande (20) sont une soupape à deux voies (41) qui est agencée entre la chambre de fluide (27) et la seconde soupape de commande (20).

4. Agencement selon la revendication 2 ou 3, dans lequel la soupape (40, 41) est une soupape commandée électriquement.

5. Agencement selon l'une quelconque des revendications 2 à 4, dans lequel la soupape (40, 41) est sollicitée vers une position, dans laquelle l'écoulement de la chambre de fluide (27) vers la seconde soupape de commande (20) est empêché.

6. Système de lubrification d'un moteur à piston, dans lequel le système de lubrification comprend un agencement de régulation de pression selon l'une quelconque des revendications précédentes.

7. Procédé de régulation de pression dans un système de lubrification d'un moteur à piston, lequel système de lubrification comprend
- une soupape de régulation de pression (16) pour relâcher la pression d'une conduite d'huile de lubrification (4) dans une conduite de relâchement de pression (15), la soupape de régulation de pression (16) comprenant une chambre de fluide (27), dans lequel le relâchement de pression de la chambre de fluide (27) est configuré pour permettre l'ouverture de la soupape de régulation de pression (16), et
- au moins deux soupapes de commande commandées par pression (19, 20), chacune des soupapes de commande (19, 20) étant configurée pour s'ouvrir lorsqu'une pression de commande au niveau de la soupape (19, 20) dépasse une valeur limite individuelle prédéterminée, dans lequel l'écoulement à travers l'une quelconque des soupapes de commande (19, 20) est configuré pour permettre l'écoulement de la chambre de fluide (27) de la soupape de régulation de pression (16) afin de relâcher la pression de la chambre de fluide (27),
le procédé comprenant les étapes de
- mise sous pression de la chambre de fluide (27) via une conduite d'actionnement (34) qui est reliée à la conduite d'huile de lubrification (4) et comprend un étranglement (31) qui est configuré pour provoquer une chute de pression lorsque l'huile de lubrification le traverse,
- détermination d'un paramètre ou d'un ensemble de paramètres décrivant les conditions de fonctionnement du moteur,
- sur la base des paramètres, détermination d'au moins deux conditions de fonctionnement différentes nécessitant des pressions d'huile de lubrification différentes,
- surveillance des conditions de fonctionnement du moteur, et
- dans chaque condition de fonctionnement détectée du moteur, agencement de la chambre de fluide (27) de la soupape de régulation de pression (16) en communication fluidique avec au moins cette soupape de commande (19, 20), qui a la valeur limite prédéterminée la plus basse correspondant à au moins la pression d'huile de lubrification requise, et prévention de la communication fluidique entre la chambre de fluide (27) et ces soupapes de commande (19, 20), dont les valeurs limites prédéterminées sont inférieures à la pression d'huile de lubrification requise.
